# EUROPÄISCHE PATENTSCHRIFT

(11) **EP 3 113 336 B1**
(45) Veröffentlichungstag und Bekanntmachung des Hinweises auf die Patenterteilung: **12.12.2018**
(21) Anmeldenummer: 16164961.1
(22) Anmeldetag: 12.04.2016
(51) Int. Cl.: H02K 11/25, G01K 1/12, G01K 1/14, H02H 7/085, H02H 7/08

(54) **MOTORTEMPERATURÜBERWACHUNG**
MOTOR TEMPERATURE MONITORING
SURVEILLANCE DE TEMPERATURE MOTEUR

(30) Priorität: 29.06.2015 DE 102015110399
(43) Veröffentlichungstag der Anmeldung: 04.01.2017
(73) Patentinhaber: ebm-papst Mulfingen GmbH & Co. KG, 74673 Mulfingen (DE)
(72) Erfinder: Hofmann, Walter, 74673 Mulfingen-Ailringen (DE); Deubler, Stefan, 74238 Krautheim-Unterginsbach (DE); Lipp, Helmut, 74677 Dörzbach-Hohebach (DE); Heli, Thomas, 74595 Langenburg (DE)
(74) Vertreter: Staeger & Sperling Partnerschaftsgesellschaft mbB

(56) Entgegenhaltungen:
- EP-A1- 1 717 932
- DE-A1- 4 136 102
- DE-A1- 19 936 218
- DE-A1-102008 046 827
- US-A1- 2009 140 614

## Beschreibung

Die Erfindung betrifft eine Temperaturüberwachungsanordnung zur Überwachung einer Wicklung eines Motors, sowie einen Motor, der mit einer solchen Temperaturüberwachungsanordnung ausgebildet ist.

In elektrischen Antrieben und Motoren ist es nahezu unvermeidlich, dass im Motor Wärmeverluste auftreten. Für den Elektromotor gibt es demzufolge eine obere Grenztemperatur, und sobald diese überschritten wird, kann der Motor beschädigt werden oder ausfallen z. B. aufgrund eines Isolationsversagens der Wicklung.

Es kann infolge von Betriebsstörungen an einer Antriebseinheit oder auch am Elektromotor selbst, zu einer unzulässig hohen Temperatur im Elektromotor kommen. Solche Fälle treten bei vorgesehenen hohen Belastungen der Maschine auf, wie bei Schwergängigkeiten oder z. B. bei Blockade der Mechanik. Auch verschmutzte Belüftungsgitter am Elektromotor können unerwünschte Temperaturerhöhungen nach sich ziehen. Überschreitet die Wicklung des Motors die zulässige Temperatur, nimmt der Elektromotor Schaden, was den Ausfall der gesamten Maschine nach sich ziehen kann. Zum Schutz des Elektromotors vor Überhitzung ist deshalb die Ermittlung der Wicklungstemperatur erforderlich.

Darüber hinaus ist man bei der Auslegung des Motors gezwungen, einen Kompromiss zwischen Baugröße und Lastmoment einzugehen. Insbesondere dann, wenn der Motor praktisch dauerhaft unterhalb seines Nennmomentes betrieben wird und nur kurzzeitige Lastspitzen oberhalb auftreten, ist es wirtschaftlich sinnvoll, den Motor nicht auf die Lastspitzen, sondern auf den zu erwartenden Mittelwert zuzüglich Sicherheitsreserve auszulegen. Um eine unnötige Überdimensionierung zu vermeiden, ist es auch aus diesem Grund erforderlich, die Motortemperatur zu ermitteln oder jedenfalls die obere Grenztemperatur zu überwachen.

Aus der Offenlegungsschrift WO 93/23904 A1 ist ein Verfahren zur Überwachung eines Elektromotors im Hinblick auf eine thermische Überlastung bekannt, bei dem es darum geht, den technischen Aufwand und das Bauvolumen des notwendigen Überlastungsschutzes des Elektromotors kleinzuhalten. Dazu wird während der Einschaltdauer des Elektromotors dessen Verlustleistung oder eine hierzu proportionale Größe anhand gemessener Motordaten berechnet und anschließend integriert. Der Integrationswert wird mit einem vorgegebenen Schwellwert verglichen, übersteigt der Integrationswert einen Schwellwertgrenzwert, wird der Elektromotor abgeschaltet. Nach diesem bekannten Verfahren kann die tatsächliche Wicklungstemperatur nur näherungsweise ermittelt werden, außerdem bleiben Umgebungseinflüsse, die für das Temperaturverhalten des Elektromotors mitverantwortlich sind, unberücksichtigt.

Bei anderen bekannten Verfahren, die ebenfalls ohne einen Temperaturfühler auskommen, wird der vom Elektromotor gezogene Strom überwacht. Überschreitet der Motorstrom über einen längeren Zeitraum hinweg den zulässigen Dauerstrom, erfolgt die Abschaltung des Motors über Motorschutzschalter oder bei drehzahlregelbaren Drehstrommotoren über den Frequenzumrichter.

Weitere bekannte Verfahren zum Schutz eines Elektromotors gegen Überhitzung sehen eine Temperaturmessung mittels eines Temperatursensors vor, der vornehmlich in die Motorwicklung eingebaut wird. So werden bei bekannten Ausführungsformen von Motoren mit umpressten Statoren z. B. Thermoschalter vor dem Umpressvorgang in die Wicklung eingesetzt und die Anschlusslitzen mit einer Leiterplatte verbunden. Erreicht die auf diese Weise ermittelte Temperatur im Nahbereich der Motorwicklung einen vorgegebenen, höchstzulässigen Grenzwert, wird auch hierbei die Abschaltung des Elektromotors veranlasst. Ein derartiges Verfahren ist aus der Offenlegungsschrift DE 199 39 997 A1 bekannt, bei dem der Überlastungsschutz des Elektromotors insbesondere hinsichtlich des Zeitverhaltens verbessert werden soll. Dazu ist eine Signalverarbeitung vorgesehen, die in Abhängigkeit von dem Ausgangssignal und von zumindest einem in der Vergangenheit liegenden Ausgangssignals des Temperatursensors ein korrigiertes Temperatursignal erzeugt.

Ein Elektromotor mit einer Temperaturüberwachung, bei der die Temperatur einer Entstördrossel gemessen wird, ist aus der DE 41 36 102 A1 bekannt.

Die aus dem Stand der Technik bekannten Vorrichtungen und Verfahren haben eine Reihe von Nachteilen, aus denen sich in der Praxis Probleme ergeben. Bei Verwendung eines Temperatursensors ist zur elektrischen Isolierung zwischen diesem und der Wicklung eine ausreichende Isolierschicht erforderlich. Diese Isolierschicht stellt zugleich eine thermische Isolierung dar, weswegen sich insbesondere bei Überlast mit hohen Strömen eine Temperaturdifferenz zwischen dem elektrisch aktiven Teil der Wicklung selbst und dem Temperatursensor ergibt. Eine verzögerte Abschaltung des Elektromotors bei bereits vorliegender Überhitzung der Motorwicklung ist die Folge. Dieser Effekt wird durch erhöhte Anforderungen an die elektrische Isolierung für den Personenschutz noch verstärkt. Über einen in die Wicklung eingebauten Temperatursensor wird überdies die Temperatur nur an einer einzigen Stelle der Wicklung erfasst.

Vor allem beim Betrieb an einem Frequenzumrichter mit kleinen Speisefrequenzen kann sich eine stark unterschiedliche Erwärmung der Wicklungsteile ergeben. Hierbei kann die heißeste Stelle der Wicklung, an der bereits eine Überhitzung vorliegt, nicht mit Sicherheit erfasst werden. Weiter störend ist die kapazitive Kopplung zwischen dem Temperatursensor und der Motorwicklung vor allem bei frequenzgesteuerten Motoren, weil Koppelströme über die Temperatursensorleitung übertragen werden.

Ferner ergeben sich bei der Integration eines Thermofühlers oder Sensors in die Wicklung ein hoher Montageaufwand und die Notwendigkeit einer im Fehlerfalle frühen Abschaltung des Motors aufgrund einer großen Temperaturdifferenz zwischen der betroffenen Wicklung und der Leiterplatte, was wiederum zu einem Lastproblem des Motors aufgrund zu geringer Auslastung führt.

Es ist daher Aufgabe der vorliegenden Erfindung, vorbesagte Nachteile zu überwinden und eine Anordnung sowie ein Verfahren zur Temperaturüberwachung eines Elektromotors bereitzustellen, die kostengünstig realisierbar ist, den gesamten Montageaufwand reduziert und auch die Lastausnutzung des Motors verbessert sowie eine unzulässige Temperaturen der Wicklungen des Elektromotors zuverlässig erfasst, um eine rechtzeitige Motorabschaltung bei bzw. vor einer thermischen Überlastung vornehmen zu können

Diese Aufgabe wird durch einen Motor mit einer Temperaturüberwachungsanordnung gemäß Anspruch 1 gelöst.

Grundgedanke der Erfindung ist es die Wärmeentwicklung und damit die Temperatur als relevante Messgröße mittels eines zur Wärmeübertragung gekoppelten Wärmeübertragungsmediums unmittelbar von oder benachbart zur Oberfläche der Motorwicklungen zu einem Sensor zu. Der Sensor ist auf einer integrierten Platte wie z. B. einer Leiterplatte des Motors angeordnet.

Erfindungsgemäß wird daher eine Temperaturüberwachungsanordnung zur Überwachung der Wicklungen eines Motors mit wenigstens einem außerhalb und beabstandet zu den Wicklungen des Motors angeordneten Temperatursensor, Thermoschalter oder eines geeigneten Temperaturfühlers vorgesehen und wenigstens ein wärmeleitendes Bauelement, das sich von einem ersten Bauelementabschnitt zur Wärmekopplung und Wärmeübertragung kontaktierend an oder benachbart zu den Wicklungen zu einem zweiten Bauelementabschnitt zur Wärmekopplung und Wärmeübertragung an oder benachbart zum Temperatursensor erstreckt.

Erfindungsgemäß ist das wärmeleitende Bauelement ein Temperaturleitblech (im Folgenden kurz: leitblech), vorzugsweise ein spezifisch an die Geometrie der Motorwicklungen angepasstes Leitblech.

Erfindungsgemäß ist das Leitblech als ein metallisches Stanzbiegeteil ausgebildet. Noch weiter bevorzugt ist es, wenn das wärmeleitende Bauelement eine Wärmeleitfähigkeit λ > 200 W/(m K) besitzt, so dass eine schnelle Temperaturerfassung ermöglicht wird.

In einer bevorzugten Ausbildung der Erfindung ist ferner eine Haltevorrichtung vorgesehen, in der der erste (zur Wärmekopplung mit den Wicklungen) ausgebildete Bauelementabschnitt des wärmeleitenden Bauelementes eingesteckt ist.

Mit Vorteil ist der erste Bauelementabschnitt des wärmeleitenden Bauelementes als ein im Wesentlichen V-förmig umgebogener Abschnitt des wärmeleitenden Bauelements ausgebildet und die Haltevorrichtung korrespondierend mit einer V-förmigen Aufnahme versehen. Aufgrund einer solchen Ausprägung lassen sich zwei benachbarte Motorwicklungen thermisch "überbrücken" d. h. gleichzeitig mittels eines gemeinsamen Leitblechs überwachen.

Es ist daher weiter bevorzugt, wenn sich der V-förmige Abschnitt des wärmeleitenden Bauelements in den Zwischenraum zwischen zwei benachbarte Wicklungen des Motors erstreckt und die Temperatur der beiden Wicklungen von einen gemeinsamen Sensor überwacht werden können.

Mit Vorteil ist vorgesehen, dass zwischen dem Temperatursensor und dem zweiten Bauelementabschnitt des wärmeleitenden Bauelementes eine thermisch leitfähige Folie angeordnet ist, die vorzugsweise den Temperatursensor unmittelbar abdeckt. Weiter vorteilhaft ist es, wenn das wärmeleitenden Bauelement ein Fußteil aufweist, das bevorzugt direkt oberhalb der wärmeleitfähigen Folie zur Wärmeübertragung der Wärme von den Spulen über die Folie zum Temperatursensor ausgebildet ist.

Bevorzugt ist eine Ausführung bei der eine Sensoraufnahme im Motor vorgesehen ist, an oder relativ zu der ein wärmeleitendes Bauelement montiert ist und das wärmeleitende Bauelement mit seinem ersten Bauelementabschnitt zwischen den Wicklungen und mit seinem zweiten Bauelementabschnitt oberhalb des zugeordneten Temperatursensors angeordnet ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig.1: eine Aufsicht auf einen Motor, der mit einer erfindungsgemäßen Temperaturüberwachungsanordnung ausgestattet ist;
- Fig.2: eine Schnittansicht entlang der Schnittlinie E-E gemäß Figur 1, und
- Fig.3: ein Detail aus Figur 2.

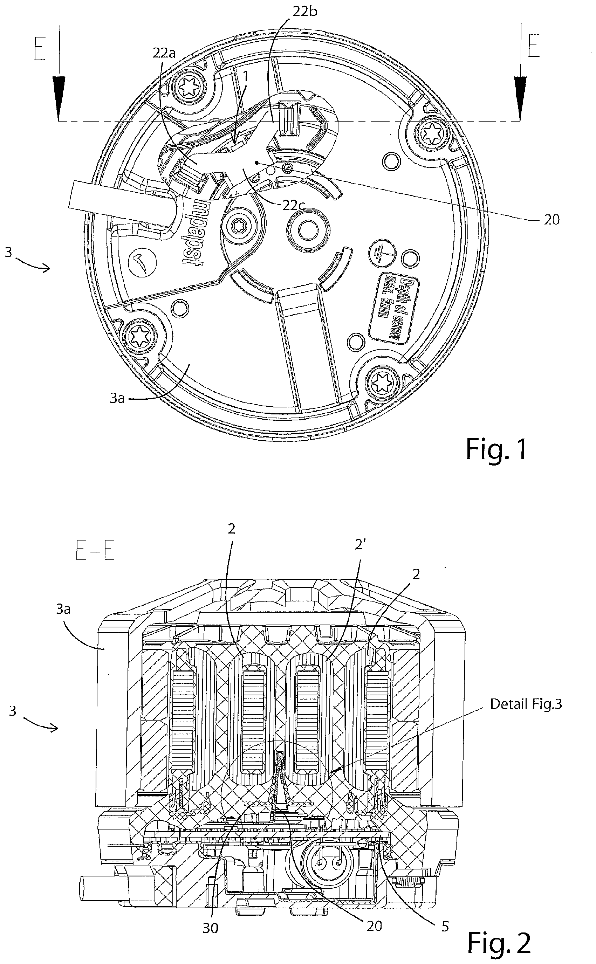

Die Erfindung wird im Folgenden mit Bezug auf die Figuren 1 bis 3 anhand eines exemplarischen Ausführungsbeispiels beschrieben, wobei gleiche Bezugszeichen auf gleiche strukturelle oder funktionale Merkmale hinweisen.

In den Figuren 1 und 2 ist ein Motor 3 dargestellt, der eine Temperaturüberwachungsanordnung 1 zur Überwachung der Wicklungen 2, 2' des Motors 3 umfasst.

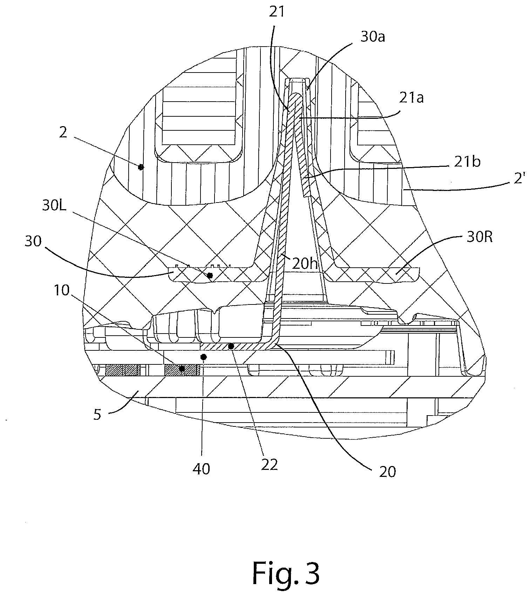

Die Temperaturüberwachungsanordnung 1 ist im Detail in der Figur 3 gezeigt, welche einen beabstandet zu den Wicklungen 2, 2' des Motors 3 angeordneten Temperatursensor 10 und ein wärmeleitendes Bauelement 20 umfasst, wobei sich das wärmeleitendes Bauelement 20 von seinem ersten Bauelementabschnitt 21 zur Wärmekopplung und Wärmeübertragung kontaktierend an oder benachbart zu den Wicklungen 2, 2' zu einem zweiten Bauelementabschnitt 22 zur Wärmekopplung und Wärmeübertragung an oder benachbart zum Temperatursensor 10 erstreckt.

Die Fig. 1 zeigt den Motor 3 in einer Ansicht von unten, wobei eine Darstellungsform gewählt wurde, bei der das Gehäuse 3a des Motors 3 teiloffen dargestellt wird, so dass das wärmeleitende Bauelement 20 ersichtlich ist. Das wärmeleitende Bauelement 20 ist als ein Leitblech geformt. Das Leitblech weist einen im Wesentlichen Y-förmigen unteren Zwei-Schenkelabschnitt auf, wobei ein linker Schenkel 22a und ein rechter Schenkel 22b in eine gemeinsame Verbindungsplatte 22c münden. Jeder Schenkelarm 22a verläuft abgewinkelt in einem Winkel von etwa 90° von einer Horizontalerstreckung des Leitbleches in eine Vertikalerstreckung und mündet endseitig in den Bauelementabschnitt 21, welcher als eine im Wesentlichen V-förmig umgebogener Abschnitt des wärmeleitenden Bauelements, sprich des Leitbleches 20, ausgebildet ist.

Die vertikale Orientierung des Vertikalabschnitts 20h des Leitblechs 20 ist gegenüber der horizontalen Orientierung des plattenartigen Abschnittes 22c des Leitblechs 20 gut in der Fig. 3 ersichtlich.

Ferner ist in Fig. 3 erkennbar, dass der erste (obere) Bauelementabschnitt 21 des Leitblechs 20 zunächst um einen Winkel von etwa 180° gekrümmt ausgebildet ist und mit einem Teilabschnitt 21a parallel zum Vertikalabschnitt 20h verläuft und sich im Anschluss daran mit einem Abschnitt 21b gegenüber Vertikalabschnitt 20h von diesem weg erstreckt.

Wie ferner in den Fig. 2 und 3 ersichtlich, ist eine Haltevorrichtung 30 vorgesehen, die als "Steckerhalter" ausgebildet ist und welche ebenfalls eine trichterförmige Aufnahme zum Einstecken des ersten Bauelementabschnitts 21, sprich des V-förmig gebogenen Bauelementabschnitts, aufweist.

In der Fig. 1 ist erkennbar, dass sich zwischen jeweils zwei Wicklungen 2, 2' eine Haltevorrichtung 30 befindet, um den jeweiligen von dem Leitblech 20 ausgebildeten, jeweils V-förmig umgebogenen ersten Bauelementabschnitt 21 aufzunehmen. Aufgrund der zuvor beschriebenen endseitigen V-förmig umgebogenen Geometrie wirkt der Abschnitt 21b zusammen mit dem Vertikalabschnitt 20h als ein Federelement, welches sich federnd gegen die Innenwände der Haltevorrichtung 30 abstützt und dort fest in Position gehalten ist.

Aufgrund der unmittelbaren Anbringung des Leitblechs mit seinem Bauelementabschnitt 21 benachbart zu den Wicklungen 2, 2' des Motors 3 wird die Wärme direkt über den Vertikalabschnitt 20h des Leitblechs 20 zum Plattenabschnitt 22c übertragen.

In den Fig. 2 und 3 ist erkennbar, dass der Temperatursensor 10 direkt auf der Leiterplatte 5 montiert ist. Aufgrund einer solchen Konstruktion ist es möglich, das Sensorbauelement beabstandet und außerhalb der Wicklungen 2, 2' des Motors 3 anzuordnen, und zwar bevorzugt zusammen mit den anderen Bauelementen auf der gleichen Leiterplatte 5. Oberhalb des Temperatursensors 10 befindet sich der horizontal verlaufende plattenförmige Abschnitt 22c des Bauelements 20. Um eine optimale Wärmeankopplung an den ebenfalls horizontal orientierte Sensor 10 zu erzielen, wird zwischen dem wärmeleitenden Bauelement 20 und der Oberseite des Temperatursensors 10 eine thermisch leitfähige Folie 40 angeordnet. Die thermisch leitfähige Folie 40 ist als elektrische Isolierfolie 40 ausgebildet.

Die Haltevorrichtung 30, die als Steckerhalter ausgebildet ist, wird bevorzugt aus einem isolierenden Material als Kunststoffspritzgussteil hergestellt. Im oberen zwischen den Wicklungen 2, 2' befindlichen Teilabschnitt 30a der Haltevorrichtung 30 ist die Wandstärke deutlich geringer als im unteren Abschnitt der Haltevorrichtung 30, die, wie in Fig. 3 gezeigt, seitliche Kragarme 30L und 30R ausbildet. Im vorliegenden Ausführungsbeispiel wurde ein wärmeleitendes Bauelement aus einem Metall mit einer Wärmeleitfähigkeit λ > 200 W/(m K) ausgebildet, um eine besonders gute Wärmeleitfähigkeit und damit schnelle Erfassungsmöglichkeit einer Temperaturerhöhung der Wicklungen 2, 2' durch den Temperatursensor 10 erfassen zu können.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Elektromotor (3) mit Wicklungen (2, 2') ausgestattet mit wenigstens einer Temperaturüberwachungsanordnung (1) mit wenigstens einem Temperatursensor (10) zur Überwachung der Wicklungen (2, 2') des Motors (3), wobei:
a. der Temperatursensor (10) außerhalb und beabstandet zu den Wicklungen (2) des Motors (3) direkt auf einer Leiterplatte (5) angeordnet ist **gekennzeichnet dadurch, dass**
b. wenigstens ein wärmeleitendes Bauelement (20) vorgesehen ist, das sich von einem ersten Bauelementabschnitt (21) zur Wärmekopplung und Wärmeübertragung kontaktierend an oder benachbart zu den Wicklungen (2, 2') zu einem zweiten Bauelementabschnitt (22) zur Wärmekopplung und Wärmeübertragung an oder benachbart zu dem auf der Leiterplatte (5) montierten Temperatursensor (10) erstreckt, wobei
c. das wärmeleitende Bauelement (20) ein Leitblech ist, welches als ein metallisches Stanzbiegeteil ausgebildet ist.

2. Elektromotor (3) gemäß Anspruch 1, **dadurch gekennzeichnet, dass** das wärmeleitende Bauelement (20) eine Wärmeleitfähigkeit λ > 200 W/(m K) besitzt.

3. Elektromotor (3) gemäß einem der vorhergehenden Ansprüche, **dadurch gekennzeichnet, dass** ferner eine trichterförmige Haltevorrichtung (30) vorgesehen ist, in die der erste Bauelementabschnitt (21) des wärmeleitenden Bauelementes (20) eingesteckt ist.

4. Elektromotor (3) gemäß einem der vorhergehenden Ansprüche, **dadurch gekennzeichnet, dass** der erste Bauelementabschnitt (21) des wärmeleitenden Bauelementes (20) als ein im Wesentlichen V-förmig umgebogener Abschnitt des wärmeleitende Bauelement (20) ausgebildet ist.

5. Elektromotor (3) gemäß Anspruch 4, **dadurch gekennzeichnet, dass** sich der V-förmige Abschnitt (21) in den Zwischenraum zwischen zwei Wicklungen (2, 2') des Motors (3) erstreckt.

6. Elektromotor (3) gemäß einem der vorhergehenden Ansprüche, **dadurch gekennzeichnet, dass** zwischen dem Temperatursensor (10) und dem zweiten Bauelementabschnitt (22) des wärmeleitenden Bauelementes (20) eine thermisch leitfähige Folie (40) angeordnet ist, die vorzugsweise den Temperatursensor (10) abdeckt.

7. Elektromotor (3) nach einem der Ansprüche 1 bis 6, das wärmeleitende Bauelement (20) mit seinem ersten Bauelementabschnitt (21) zwischen den Wicklungen (2, 2') und mit seinem zweiten Bauelementabschnitt (22) oberhalb des Temperatursensors (10) angeordnet ist.

## Claims

1. Electric motor (3) having windings (2, 2') provided with at least one temperature monitoring assembly (1) having a temperature sensor (10) for monitoring the windings (2, 2') of the motor (3), wherein:
a. the temperature sensor (10) is arranged outside of and spaced from the windings (2) of the motor (3) directly on a circuit board (5),
b. at least one heat conducting component (20) is provided, which extends from a first component section (21) for heat coupling and heat transfer, which is in contact with or adjacent to the windings (2, 2'), to a second component section (22) for heat coupling and heat transfer, on or adjacent to the temperature sensor (10) mounted on the circuit board, wherein
c. the heat conducting component (20) is a conductive plate, embodied as a metallic stamped and bent component.

2. Electric motor (3) according to claim 1, **characterized in that** the heat conducting component (20) has a thermal conductivity of λ > 200 W/(m K).

3. Electric motor (3) according to any one of the preceding claims, **characterized in that** a funnel-shaped mounting device (30) is further provided, into which the first component section (21) of the heat conducting component (20) is inserted.

4. Electric motor (3) according to any one of the preceding claims, **characterized in that** the first component section (21) of the heat conducting component (20) is embodied as a section of the heat conducting component (20) that is bent substantially into a V-shape.

5. Electric motor (3) according to claim 4, **characterized in that** the V-shaped section (21) extends in the space between two windings (2, 2') of the motor (3).

6. Electric motor (3) according to any one of the preceding claims, **characterized in that** a heat conducting film (40), which preferably covers the temperature sensor (10), is arranged between the temperature sensor (10) and the second component section (22) of the heat conducting component (20).

7. Electric motor (3) according to any one of the claims 1 to 6, wherein the heat conducting component (20) is arranged with its first component section (21) between the windings (2, 2') and with its second component section (22) above the temperature sensor (10).

## Revendications

1. Moteur électrique (3) avec des enroulements (2, 2') équipé d'au moins un système de surveillance de température (1) avec au moins un capteur de température (10) pour la surveillance des enroulements (2, 2') du moteur (3), dans lequel :
a. le capteur de température (10) est agencé à l'extérieur et à distance des enroulements (2) du moteur (3) directement sur un circuit imprimé (5),
**caractérisé en ce que**
b. au moins un composant thermoconducteur (20) est prévu, qui s'étend d'une première section de composant (21) pour le couplage de chaleur et la transmission de chaleur par contact avec ou de manière adjacente aux enroulements (2, 2') à une deuxième section de composant (22) pour le couplage de chaleur et la transmission de chaleur à ou de manière adjacente au capteur de température (10) monté sur le circuit imprimé (5), dans lequel
c. le composant thermoconducteur (20) est un déflecteur, lequel est réalisé en tant que pièce pliée estampée métallique.

2. Moteur électrique (3) selon la revendication 1, **caractérisé en ce que** le composant thermoconducteur (20) dispose d'une conductivité thermique λ > 200 W/(m K).

3. Moteur électrique (3) selon l'une quelconque des revendications précédentes, **caractérisé en ce qu'**un dispositif de retenue (30) en forme d'entonnoir est prévu en outre, dans lequel la première section de composant (21) du composant thermoconducteur (20) est enfichée.

4. Moteur électrique (3) selon l'une quelconque des revendications précédentes, **caractérisé en ce que** la première section de composant (21) du composant thermoconducteur (20) est réalisée en tant que section pliée sensiblement en forme de V du composant thermoconducteur (20).

5. Moteur électrique (3) selon la revendication 4, **caractérisé en ce que** la section en forme de V(21) s'étend dans l'espace intermédiaire entre deux enroulements (2, 2') du moteur (3).

6. Moteur électrique (3) selon l'une quelconque des revendications précédentes, **caractérisé en ce qu'**une feuille thermoconductible (40), qui couvre de préférence le capteur de température (10), est agencée entre le capteur de température (10) et la deuxième section de composant (22) du composant thermoconducteur (20).

7. Moteur électrique (3) selon l'une quelconque des revendications 1 à 6, le composant thermoconducteur (20) est agencé avec sa première section de composant (21) entre les enroulements (2, 2') et avec sa deuxième section de composant (22) au-dessus du capteur de température (10).
